(19)

Europäisches
Patentamt
European
Patent Office
Office européen
des brevets

(11) **EP 3 454 083 A1**

(12) **EUROPEAN PATENT APPLICATION**

(43) Date of publication:
**13.03.2019 Bulletin 2019/11**

(51) Int Cl.:
***G01S 13/90*** *(2006.01)*        ***G01S 7/02*** *(2006.01)*
***G01S 13/32*** *(2006.01)*

(21) Application number: **18193062.9**

(22) Date of filing: **06.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.09.2017 CN 201710800564**

(71) Applicant: **Institute of Electronics, Chinese Academy of Sciences Beijing 100190 (CN)**

(72) Inventors:
• **WANG,, Yu**
  **BEIJING,, Beijing 100190 (CN)**

• **ZHU,, Xiaojing**
  **BEIJING,, Beijing 100190 (CN)**
• **DENG,, Yunkai**
  **BEIJING,, Beijing 100190 (CN)**
• **YU,, Weidong**
  **BEIJING,, Beijing 100190 (CN)**
• **LI,, Fei**
  **BEJING,, Beijing 100190 (CN)**
• **ZHANG, Zhimin**
  **BEIJING,, Beijing 100190 (CN)**
• **WANG,, Wei**
  **BEIJING,, Beijing 100190 (CN)**

(74) Representative: **Brevalex**
  **95, rue d'Amsterdam**
  **75378 Paris Cedex 8 (FR)**

(54) **METHOD AND DEVICE FOR SUPPRESSING RANGE AMBIGUITY IN FULL POLARIMETRIC SYNTHETIC APERTURE RADAR**

(57)    Disclosed are a method and device for suppressing range ambiguity in Synthetic Aperture Radar (SAR). Azimuth transmission-phase modulation is performed respectively, using a preset rule for phase modulation, on pulse signal data transmitted on a channel of Horizontal (H) polarization and pulse signal data transmitted on a channel of Vertical (V) polarization. Full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation. Echo data are acquired by filtering out, using a preset azimuth filter, range-ambiguity energy from the phase demodulated full polarimetric echo data.

azimuth transmission-phase modulation is performed respectively, using a preset rule for phase modulation, on pulse signal data transmitted on a channel of H polarization and pulse signal data transmitted on a channel of V polarization — 101

full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation — 102

echo data are acquired by filtering out, using a preset azimuth filter, range-ambiguity energy from the phase demodulated full polarimetric echo data — 103

FIG.1

EP 3 454 083 A1

**Description**

**TECHNICAL FIELD**

The present disclosure relates to Synthetic Aperture Radar (SAR), and in particular to a method and device for suppressing range ambiguity in SAR.

**BACKGROUND**

Compared to single polarimetric SAR, full polarimetric SAR, as a trend in SAR research and development, may allow detection of much more information on scattering by an object on the ground. However, major range ambiguity comes with full polarimetric SAR due to interference on a channel of cross polarization by an intense co-polarized range ambiguous signal.

In spaceborne SAR, range ambiguity may be suppressed, by suppressing a side lobe of an antenna in a range ambiguous region via antenna shaping, and /or by moving the range ambiguous region away from a main lobe of the antenna by lowering a Pulse Recurrence Frequency (PRF).

With an existing solution, range ambiguity may be suppressed by shaping a radiation pattern of an antenna, up and /or down chirp modulation, Azimuth Phase Coding (APC), range Digital Beam Forming (DBF), etc.

With the radiation pattern shaping, range ambiguity may be suppressed by reducing received range-ambiguity energy by suppressing a side lobe corresponding to the range ambiguous region, which costs a lot in terms of antenna design. With the up and /or down chirp modulation, range ambiguity may be suppressed by distributing the ambiguity energy evenly throughout a band, with a downside that it may not work very well for a distributed object. With the APC, range ambiguity may be suppressed by converting range-ambiguity energy into azimuth ambiguity by modulating and demodulating a pulse transmitted, and then removing out-of-band ambiguity energy in an azimuth Doppler frequency domain using a Brick-Wall filter. The APC has been proposed for single polarimetric SAR, and may not be applied straightforwardly to full polarimetric SAR. With the range DBF, range ambiguity may be suppressed by forming an equivalent antenna of a narrow beam and a high gain in a swath. However, the range DBF may lead to an increased number of channels and increased complexity of a SAR system.

There is a pressing need for a solution for effectively improving range ambiguity performance of full polarimetric SAR that is easy to implement and saves cost.

**SUMMARY**

In view of this, embodiments herein provide a method and device for suppressing range ambiguity in SAR, capable of effectively improving range ambiguity performance of full polarimetric SAR with easy implementation and low cost.

A technical solution herein may be implemented as follows.

According to an embodiment herein, a method for suppressing range ambiguity in Synthetic Aperture Radar (SAR) includes:

performing, using a preset rule for phase modulation, azimuth transmission-phase modulation respectively on pulse signal data transmitted on a channel of Horizontal (H) polarization and pulse signal data transmitted on a channel of Vertical (V) polarization;

acquiring full polarimetric echo data corresponding to the transmission-phase modulated pulse signal data transmitted on the channel of H polarization and the transmission-phase modulated pulse signal data transmitted on the channel of V polarization, and performing azimuth phase demodulation on the full polarimetric echo data using a preset rule for phase demodulation; and

acquiring echo data by filtering out, using a preset azimuth filter, range-ambiguity energy from the phase demodulated full polarimetric echo data.

The performing, using a preset rule for phase modulation, azimuth transmission-phase modulation respectively on pulse signal data transmitted on a channel of Horizontal (H) polarization and pulse signal data transmitted on a channel of Vertical (V) polarization may include:

performing no phase modulation on the pulse signal data transmitted on the channel of H polarization; and
performing linear phase modulation on the pulse signal data transmitted on the channel of V polarization by setting a product of $\pi$ and a sequence number of the pulse signal data being transmitted on the channel of V polarization as a modulation phase for performing linear phase modulation on the pulse signal data being transmitted on the channel of V polarization.

The performing azimuth phase demodulation on the full polarimetric echo data using a preset rule for phase demodulation may include: performing phase demodulation on the full polarimetric echo data using a transmission phase consistent with a main signal.

The filtering out, using a preset azimuth filter, range-ambiguity energy from the phase demodulated full polarimetric echo data may include:

converting the phase demodulated full polarimetric echo data into phase demodulated full polarimetric echo data in a Doppler frequency domain; and

filtering the phase demodulated full polarimetric echo data in the Doppler frequency domain using an azimuth frequency-domain Wiener filter.

The azimuth frequency-domain Wiener filter may be associated with a formula of:

$$H(f) = \frac{S_0(f)}{S_0(f) + S_{-1}(f) + S_{+1}(f) + \sigma_t}.$$

The $S_0(f)$ may be an azimuth spectrum of a payload signal. Each of the $S_{-1}(f)$ and the $S_{+1}(f)$ may be an azimuth spectrum of a first-order ambiguous signal. The $\sigma_t$ may be a noise power spectrum.

According to an embodiment herein, a device for suppressing range ambiguity in Synthetic Aperture Radar (SAR) includes a modulating module, a demodulating module, and a filtering module.

The modulating module is arranged for: performing, using a preset rule for phase modulation, azimuth transmission-phase modulation respectively on pulse signal data transmitted on a channel of Horizontal (H) polarization and pulse signal data transmitted on a channel of Vertical (V) polarization.

The demodulating module is arranged for: acquiring full polarimetric echo data corresponding to the transmission-phase modulated pulse signal data transmitted on the channel of H polarization and the transmission-phase modulated pulse signal data transmitted on the channel of V polarization, and performing azimuth phase demodulation on the full polarimetric echo data using a preset rule for phase demodulation.

The filtering module is arranged for: acquiring echo data by filtering out, using a preset azimuth filter, range-ambiguity energy from the phase demodulated full polarimetric echo data.

The modulating module may be arranged for:

performing no phase modulation on the pulse signal data transmitted on the channel of H polarization; and

performing linear phase modulation on the pulse signal data transmitted on the channel of V polarization by setting a product of $\pi$ and a sequence number of the pulse signal data being transmitted on the channel of V polarization as a modulation phase for performing linear phase modulation on the pulse signal data being transmitted on the channel of V polarization.

The demodulating module may be arranged for: performing phase demodulation on the full polarimetric echo data using a transmission phase consistent with a main signal.

The filtering module may be arranged for:

converting the phase demodulated full polarimetric echo data into phase demodulated full polarimetric echo data in a Doppler frequency domain; and

filtering the phase demodulated full polarimetric echo data in the Doppler frequency domain using an azimuth frequency-domain Wiener filter.

The azimuth frequency-domain Wiener filter may be associated with a formula of:

$$H(f) = \frac{S_0(f)}{S_0(f) + S_{-1}(f) + S_{+1}(f) + \sigma_t}.$$

The $S_0(f)$ may be an azimuth spectrum of a payload signal. Each of the $S_{-1}(f)$ and the $S_{+1}(f)$ may be an azimuth spectrum of a first-order ambiguous signal. The $\sigma_t$ may be a noise power spectrum.

According to an embodiment herein, a computer-readable storage medium has stored therein instructions that, when executed by a processor, cause the processor to perform an aforementioned method for suppressing range ambiguity in SAR.

According to an embodiment herein, a device for suppressing range ambiguity in Synthetic Aperture Radar (SAR) includes a processor and memory storing instructions executable by the processor. When executed by the processor, the instructions cause the processor to perform an aforementioned method for suppressing range ambiguity in SAR.

With the method and device for suppressing range ambiguity in SAR according to embodiments herein, azimuth transmission-phase modulation is performed respectively, using a preset rule for phase modulation, on pulse signal data transmitted on a channel of Horizontal (H) polarization and pulse signal data transmitted on a channel of Vertical (V) polarization. Full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation. Echo data are acquired by filtering out, using a preset azimuth filter, range-ambiguity energy from the phase demodulated full polarimetric echo data. Thus, ambiguity energy in an echo signal of full polarimetric SAR may be suppressed, effectively improving range ambiguity performance of full polarimetric SAR with easy implementation and low cost, without increasing a number of channels, increasing complexity of a SAR system, or the need to redesign an antenna.

## BRIEF DESCRIPTION OF DRAWINGS

FIG.1 is a flowchart of a method for suppressing range ambiguity in SAR according to an embodiment herein.

FIG.2 is a diagram of a modulated transmission phase of full polarimetric SAR according to an embodiment herein.

FIG.3 is a diagram of an azimuth spectrum of an azimuth phase demodulated echo of full polarimetric SAR according to an embodiment herein.

FIG.4 is a diagram of Range-Ambiguity-to-Signal Ratios (RASR) of channels of co-polarization and of cross polarization according to an embodiment herein.

FIG.5 is a diagram of results measured on channels of co-polarization and of cross polarization according to an embodiment herein.

FIG.6 is a diagram of a structure of a device for suppressing range ambiguity in SAR according to an embodiment herein.

## DETAILED DESCRIPTION

According to embodiments herein, azimuth transmission-phase modulation is performed respectively, using a preset rule for phase modulation, on pulse signal data transmitted on a channel of Horizontal (H) polarization and pulse signal data transmitted on a channel of Vertical (V) polarization. Full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation. Echo data are acquired by filtering out, using a preset azimuth filter, range-ambiguity energy from the phase demodulated full polarimetric echo data.

The present disclosure will be elaborated below with reference to an embodiment herein.

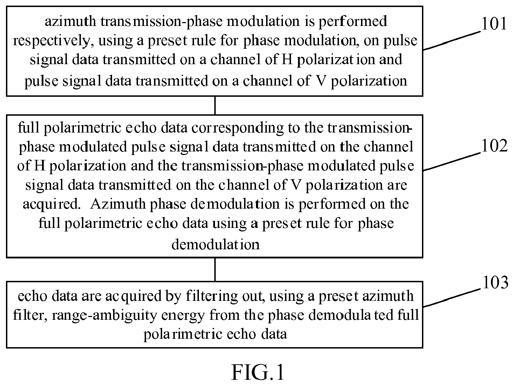

As shown in FIG.1, a method for suppressing range ambiguity in SAR according to an embodiment herein includes step(s) as follows.

In step 101, azimuth transmission-phase modulation is performed respectively, using a preset rule for phase modulation, on pulse signal data transmitted on a channel of H polarization and pulse signal data transmitted on a channel of V polarization.

In full polarimetric SAR, a pulse may be transmitted alternatively on a channel of H polarization (H channel) and a channel of V polarization (V channel). Azimuth transmission-phase modulation may be performed on the pulse signal data corresponding to the pulse transmitted alternatively on the channel of H polarization and the channel of V polarization. The full polarimetric SAR may be spaceborne.

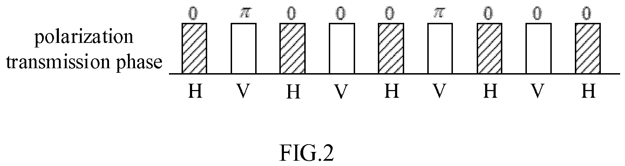

As shown in FIG.2, the preset rule for phase modulation may be as follows. No phase modulation may be performed on the pulse signal data transmitted on the channel of H polarization. Linear phase modulation may be performed on the pulse signal data transmitted on the channel of V polarization, such as by setting a product of $\pi$ and a sequence number of the pulse signal data being transmitted on the channel of V polarization as a modulation phase for performing linear phase modulation on the pulse signal data being transmitted on the channel of V polarization, as shown by a formula (1).

$$\varphi_{\mathrm{mod\_H}} = 0$$
$$\varphi_{\mathrm{mod\_V}} = \pi n \qquad\qquad (1)$$

The $\varphi_{\mathrm{mod\_H}}$ may be a modulation phase of the pulse signal transmitted on the channel of H polarization. The $\varphi_{\mathrm{mod\_V}}$ may be the modulation phase of the pulse signal transmitted on the channel of V polarization. The n may be the sequence number of the pulse signal data that specifies an nth pulse transmitted.

The modulated pulse signal data may then be transmitted. A polarized signal $H+V \cdot \exp(j\varphi)$ and a polarized signal $H-V \cdot \exp(j\varphi)$ may be transmitted, alternatively.

In step 102, full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation.

In full polarimetric SAR, a pulse may be transmitted respectively on the channel of H polarization and the channel of V polarization. The full polarimetric echo data may then be formed by polarimetric echo data of four channels HH, HV, VH, and VV received respectively on the channel of H polarization and the channel of V polarization.

Phase demodulation may be performed, using the preset rule for phase demodulation, on the overall full polarimetric echo signal of the four-channel polarimetric echo data received on the channel of H polarization and the channel of V polarization of full polarimetric SAR. According to the preset rule for phase demodulation, phase demodulation may be performed on the overall full polarimetric echo signal using a transmission phase consistent with a main signal, as shown by a formula (2). The main signal may refer to a payload (i.e., useful) signal of full polarimetric SAR.

$$\phi_{demo}(n) = \phi_{mod}(n-m) \qquad\qquad (2)$$

The $\phi_{demo}(n)$ may be a demodulation phase. The n may specify an nth pulse received. The m may account for a round-trip delay between a pulse transmitted and a pulse received.

The modulation and demodulation may have no impact on the main signal. The demodulation phase used is the transmission phase used for the main signal. Therefore, a residual phase of the main signal after the demodulation is 0. Accordingly, there will be no shift in an azimuth spectrum of the main signal.

A residual phase of a kth-order range ambiguous signal in the four-channel polarimetric echo data of full polarimetric SAR having gone through the modulation and the demodulation may be expressed by a formula (3).

$$\varphi_{res\_p}(n,k) = \begin{cases} 0 & p = HH\,/\,VH, k = even \\ \dfrac{k}{2}\pi & p = HV\,/\,VV, k = even \\ n\pi + \dfrac{k-1}{2}\pi & k = odd \end{cases} \qquad\qquad (3)$$

The p may be one of the four channels of polarization HH, HV, VH, and VV. An even k may indicate an even ambiguous region. An odd k may indicate an odd ambiguous region.

According to the formula (3), after the modulation and the demodulation of full polarimetric SAR, there is no residual phase for the channels HH and VH in an even ambiguous region, and a residual phase of $\dfrac{k}{2}\pi$ for the channels HV and VV in an even ambiguous region. Therefore, a fixed residual phase due to the modulation and the demodulation may have no impact on a spectrum of a signal in an even ambiguous region. On the other hand, an azimuth linear residual phase $n\pi + \dfrac{k-1}{2}\pi$ may be produced by odd-order signals of all components of the H channel and the V channel. A formula (4) may be acquired according to an azimuth time $t_m = n/PRF$.

$$f\left(\varphi_{res\_odd}\right) = \exp\left\{jn\pi + j\frac{k-1}{2}\pi\right\}$$

$$= \exp\left\{j \cdot PRF \cdot t_m \cdot \pi + j\frac{k-1}{2}\pi\right\} \quad (4)$$

$$= \exp\left\{j2\pi\left(\frac{PRF}{2}t_m + \frac{k-1}{4}\right)\right\}$$

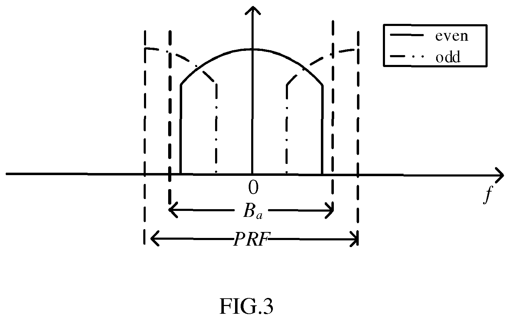

According to the formula (4), a frequency shift of PRF/2 in a Doppler frequency domain may be produced for a signal in an odd ambiguous region. FIG.3 is a diagram of an azimuth spectrum of the phase demodulated echo data.

In step 103, echo data are acquired by filtering out, using a preset azimuth filter, range-ambiguity energy from the phase demodulated full polarimetric echo data.

An azimuth filter may be preset according to the rule for phase modulation and the rule for phase demodulation. The phase demodulated full polarimetric echo data may then be filtered using the preset azimuth filter. The preset azimuth filter may be an azimuth frequency-domain Wiener filter. The azimuth frequency-domain Wiener filter may be constructed based on a Minimum-Mean-Square-Error (MMSE) theory, i.e., by minimizing a mean square error of an unambiguous signal and a filtered signal. The phase demodulated full polarimetric echo data may be converted into phase demodulated full polarimetric echo data in the Doppler frequency domain. The phase demodulated full polarimetric echo data in the Doppler frequency domain may then be filtered using the azimuth frequency-domain Wiener filter. Out-of-band ambiguity energy may thus be removed. Part of in-band ambiguity energy may be removed as well.

A key reason the azimuth frequency-domain Wiener filter may be used is that the spectrum of an ambiguous signal is inconsistent with that of the main signal. The modulation and the demodulation may convert the range-ambiguity energy into azimuth-ambiguity energy. A range ambiguous spectrum in the Doppler frequency domain may be shifted with respect to the spectrum of the main signal. A Wiener filter may show high performance in solving an MMSE-related problem. The Wiener filter may be expressed by a formula (5).

$$H\left(f\right) = \frac{S_0\left(f\right)}{S_0\left(f\right) + S_{-1}\left(f\right) + S_{+1}\left(f\right) + \sigma_t} \quad (5)$$

The $S_0(f)$ may be the azimuth spectrum of the main signal, namely, the payload signal. The $S_{-1}(f)$ may be an azimuth spectrum of an ambiguous signal of an order -1. The $S_{+1}(f)$ may be an azimuth spectrum of an ambiguous signal of an order 1. The $\sigma_t$ may be a noise power spectrum. Each of the $S_0(f)$, the $S_{-1}(f)$, the $S_{+1}(f)$, and the $\sigma_t$ may be acquired using an existing computational model according to a parameter of full polarimetric SAR.

With the step, the range ambiguity in full polarimetric SAR may be suppressed, and the echo data with the range-ambiguity energy removed may be acquired.

The present disclosure is elaborated below with reference to one or more examples.

In an example, a Range-Ambiguity-To-Signal Ratio (RASR) of full polarimetric SAR may be simulated and compared. Table 1 shows a parameter of radar in a band L.

Table 1

| carrier frequency of transmitted signal | 1.26GHz | bandwidth of transmitted signal | 140MHz |
|---|---|---|---|
| width of transmitted signal | 70us | pitch angle | 35° |
| height of platform | 607km | speed of flight of platform | 7,500m/s |
| system Doppler bandwidth | 1,235.9Hz | length of antenna | 2.9m |

After the azimuth filtering according to an embodiment herein, the RASR of full polarimetric SAR may be expressed by a formula (6).

$$RASR = \frac{\sum_{k \neq 0} C_{ak} \cdot S_{ak}}{C_0 \cdot S_0} \qquad (6)$$

The $C_{ak}$ may be a coefficient for filtering an azimuth spectrum of a kth-order ambiguous signal. The $C_0$ may be an azimuth filtering ratio of the payload signal.

The $S_{ak}$ may be energy of the kth-order ambiguous signal. The $S_0$ may be energy of the payload signal.

Using the Wiener filter, the coefficient $C_{ak}$ and the ratio $C_0$ may be computed respectively using a formula (7) and a formula (8).

$$C_{ak} = \frac{\int_{-B_a/2}^{B_a/2} H^2(f) \cdot G'^2_{ak}\left(f + \frac{k \cdot PRF}{2}\right) df}{\int_{-PRF/2}^{PRF/2} G'^2_{ak}\left(f + \frac{k \cdot PRF}{2}\right) df} \qquad (7)$$

$$C_0 = \frac{\int_{-B_a/2}^{B_a/2} H^2(f) \cdot G'^2_0(f) df}{\int_{-PRF/2}^{PRF/2} G'^2_{ak}(f) df} \qquad (8)$$

The H(f) may be the frequency-domain Wiener filter. The $G'_{ak}$ may be an azimuth radiation pattern of the system antenna. The $G'_0$ may be a pattern of the payload signal.

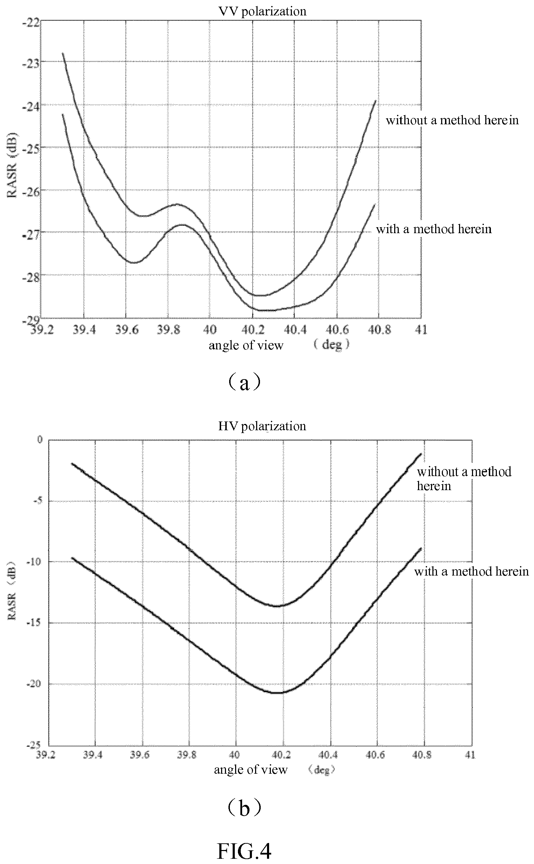

FIG.4(a) and FIG.4(b) show the RASR of a channel of co-polarization and the RASR of a channel of cross polarization, respectively, when applying the present disclosure to conventional full polarimetric SAR in the band L. As simulated, data on the channel of co-polarization of full polarimetric SAR in an odd ambiguous region may be of an ambiguous signal of cross polarization, so that ambiguity performance of the channel of co-polarization is not degraded and may meet a system requirement. However, data on the channel of cross polarization in an odd ambiguous region may be of an ambiguous signal of co-polarization. The ambiguous signal thus may have a major impact on the payload signal. The RASR of the channel of cross polarization may drop dramatically. The channel of co-polarization may include a low-energy signal of HV polarization in an odd ambiguous region. Therefore, with the method according to an embodiment herein, the RASR of the channel of co-polarization may be improved but marginally, by about 2dB. The channel of cross polarization may include a high-energy signal of co-polarization in an odd ambiguous region. Therefore, with the method according to an embodiment herein, more energy may be filtered out compared with the case of the channel of co-polarization. Accordingly, improvement to the range ambiguity performance of the channel of cross polarization is significant, compared to improvement to that of the channel of co-polarization, with a RASR of the channel of cross polarization improved by about 7dB.

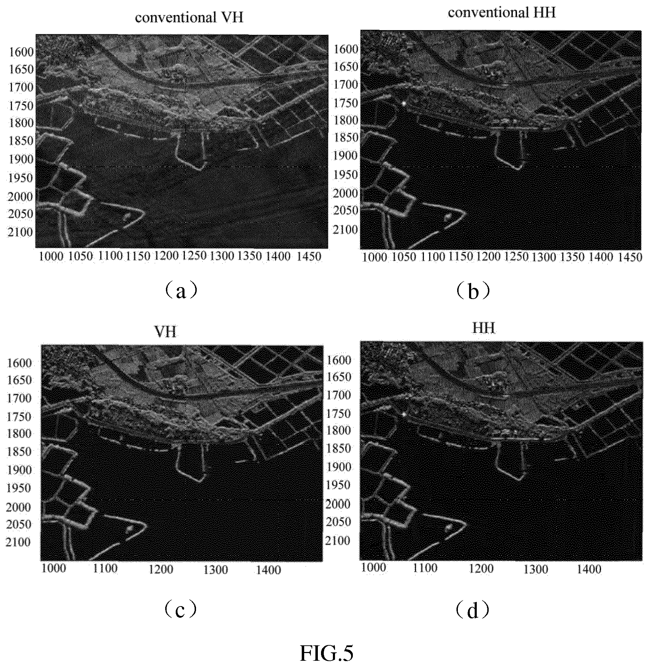

FIG.5 shows images measured by SAR on the channel of VH polarization and the channel of HH polarization in the band L when applying and not applying the present disclosure. FIG.5 shows significant suppression of range ambiguity of an area object by the method according to an embodiment herein. FIG.5(a) is an image of echo of VH cross polarization by conventional full polarimetric SAR. Significant contamination by range ambiguity of co-polarization may sharply lower quality of the image. Compared with FIG.5(a) of VH cross polarization, there is barely any impact of range ambiguity on an image of echo of HH co-polarization by conventional full polarimetric SAR in FIG.5(b). FIG.5(c) and FIG.5(d) are an image of echo of VH cross polarization and an image of echo of HH co-polarization, respectively, with range ambiguity suppressed using the method according to an embodiment herein. Most ambiguity energy on the channels HH and HV of conventional full polarimetric SAR may be removed by applying the range ambiguity suppression according to an embodiment herein, greatly improving performance of images of the channels VH and HH.

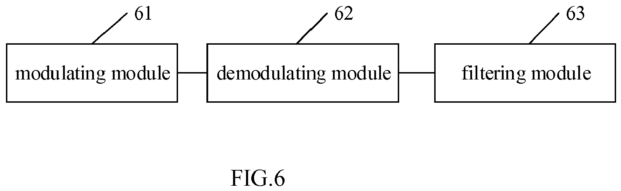

As shown in FIG.6, a device for suppressing range ambiguity in SAR according to an embodiment herein includes a modulating module 61, a demodulating module 62, and a filtering module 63.

The modulating module 61 is arranged for: performing, using a preset rule for phase modulation, azimuth transmission-phase modulation respectively on pulse signal data transmitted on a channel of Horizontal (H) polarization and pulse signal data transmitted on a channel of Vertical (V) polarization.

In full polarimetric SAR, a pulse may be transmitted alternatively on a channel of H polarization (H channel) and a channel of V polarization (V channel). Azimuth transmission-phase modulation may be performed on the pulse signal data corresponding to the pulse transmitted alternatively on the channel of H polarization and the channel of V polarization. The full polarimetric SAR may be spaceborne.

As shown in FIG.2, the preset rule for phase modulation may be as follows. No phase modulation may be performed on the pulse signal data transmitted on the channel of H polarization. Linear phase modulation may be performed on the pulse signal data transmitted on the channel of V polarization, such as by setting a product of $\pi$ and a sequence number of the pulse signal data being transmitted on the channel of V polarization as a modulation phase for performing linear phase modulation on the pulse signal data being transmitted on the channel of V polarization, as shown by the formula (1).

The $\varphi_{\mathrm{mod\_}H}$ may be a modulation phase of the pulse signal transmitted on the channel of H polarization. The $\varphi_{\mathrm{mod\_}V}$ may be the modulation phase of the pulse signal transmitted on the channel of V polarization. The n may be the sequence number of the pulse signal data that specifies an nth pulse transmitted.

The modulated pulse signal data may then be transmitted. A polarized signal $H+V\cdot\exp(j\varphi)$ and a polarized signal $H-V\cdot\exp(j\varphi)$ may be transmitted, alternatively.

The demodulating module 62 is arranged for: acquiring full polarimetric echo data corresponding to the transmission-phase modulated pulse signal data transmitted on the channel of H polarization and the transmission-phase modulated pulse signal data transmitted on the channel of V polarization, and performing azimuth phase demodulation on the full polarimetric echo data using a preset rule for phase demodulation.

In full polarimetric SAR, a pulse may be transmitted respectively on the channel of H polarization and the channel of V polarization. The full polarimetric echo data may then be formed by polarimetric echo data of four channels HH, HV, VH, and VV received respectively on the channel of H polarization and the channel of V polarization.

Phase demodulation may be performed, using the preset rule for phase demodulation, on the overall full polarimetric echo signal of the four-channel polarimetric echo data received on the channel of H polarization and the channel of V polarization of full polarimetric SAR. According to the preset rule for phase demodulation, phase demodulation may be performed on the overall full polarimetric echo signal using a transmission phase consistent with a main signal, as shown by the formula (2). The main signal may refer to a payload (i.e., useful) signal of full polarimetric SAR.

The $\phi_{demo}(n)$ may be a demodulation phase. The n may specify an nth pulse received. The m may be a number of inter-pulse intervals between a pulse transmitted and a pulse received.

The modulation and demodulation may have no impact on the main signal. The demodulation phase used is the transmission phase used for the main signal. Therefore, a residual phase of the main signal after the demodulation is 0. Accordingly, there will be no shift in an azimuth spectrum of the main signal.

A residual phase of a kth-order range ambiguous signal in the four-channel polarimetric echo data of full polarimetric SAR having gone through the modulation and the demodulation may be expressed by the formula (3).

The p may be one of the four channels of polarization HH, HV, VH, and VV. An even k may indicate an even ambiguous region. An odd k may indicate an odd ambiguous region.

According to the formula (3), after the modulation and the demodulation of full polarimetric SAR, there is no residual phase for the channels HH and VH in an even ambiguous region, and a residual phase of $\dfrac{k}{2}\pi$ for the channels HV and VV in an even ambiguous region. Therefore, a fixed residual phase due to the modulation and the demodulation may have no impact on a spectrum of a signal in an even ambiguous region. On the other hand, an azimuth linear residual phase $n\pi + \dfrac{k-1}{2}\pi$ may be produced by odd-order signals of all components of the H channel and the V channel. The formula (4) may be acquired according to an azimuth time $t_m = n/PRF$ .

According to the formula (4), a frequency shift of PRF/2 in a Doppler frequency domain may be produced for a signal in an odd ambiguous region. FIG.3 is a diagram of an azimuth spectrum of the phase demodulated echo data.

The filtering module 63 is arranged for: acquiring echo data by filtering out, using a preset azimuth filter, range-ambiguity energy from the phase demodulated full polarimetric echo data.

An azimuth filter may be preset according to the rule for phase modulation and the rule for phase demodulation. The phase demodulated full polarimetric echo data may then be filtered using the preset azimuth filter. The preset azimuth filter may be an azimuth frequency-domain Wiener filter. The azimuth frequency-domain Wiener filter may be constructed based on a Minimum-Mean-Square-Error (MMSE) theory, i.e., by minimizing a mean square error of an unambiguous signal and a filtered signal. The phase demodulated full polarimetric echo data may be converted into phase demodulated full polarimetric echo data in the Doppler frequency domain. The phase demodulated full polarimetric echo data in the Doppler frequency domain may then be filtered using the azimuth frequency-domain Wiener filter. Out-of-band ambiguity energy may thus be removed. Part of in-band ambiguity energy may be removed as well.

A key reason the azimuth frequency-domain Wiener filter may be used is that the spectrum of an ambiguous signal is inconsistent with that of the main signal. The modulation and the demodulation may convert the range-ambiguity energy into azimuth-ambiguity energy. A range ambiguous spectrum in the Doppler frequency domain may be shifted with respect to the spectrum of the main signal. A Wiener filter may show high performance in solving an MMSE-related problem. The Wiener filter may be expressed by the formula (5).

The $S_0(f)$ may be the azimuth spectrum of the main signal, namely, the payload signal. The $S_{-1}(f)$ may be an azimuth spectrum of an ambiguous signal of an order -1. The $S_{+1}(f)$ may be an azimuth spectrum of an ambiguous signal of an order 1. The $\sigma_t$ may be a noise power spectrum. Each of the $S_0(f)$, the $S_{-1}(f)$, the $S_{+1}(f)$, and the $\sigma_t$ may be acquired using an existing computational model according to a parameter of full polarimetric SAR.

With the step, the range ambiguity in full polarimetric SAR may be suppressed, and the echo data with the range-ambiguity energy removed may be acquired.

Each of the modulating module 61, the demodulating module 62, and the filtering module 63 may be implemented by at least one of a Central Processing Unit (CPU), a Micro Processing Unit (MPU), a Digital Signal Processor (DSP), a Field - Programmable Gate Array (FPGA), etc., in SAR.

According to an embodiment herein, a computer-readable storage medium has stored therein instructions that, when executed by a processor, cause the processor to perform a method for suppressing range ambiguity in SAR. As shown in FIG.1, the method includes step(s) as follows.

In step 101, azimuth transmission-phase modulation is performed respectively, using a preset rule for phase modulation, on pulse signal data transmitted on a channel of H polarization and pulse signal data transmitted on a channel of V polarization.

In full polarimetric SAR, a pulse may be transmitted alternatively on a channel of H polarization (H channel) and a channel of V polarization (V channel). Azimuth transmission-phase modulation may be performed on the pulse signal data corresponding to the pulse transmitted alternatively on the channel of H polarization and the channel of V polarization. The full polarimetric SAR may be spaceborne.

As shown in FIG.2, the preset rule for phase modulation may be as follows. No phase modulation may be performed on the pulse signal data transmitted on the channel of H polarization. Linear phase modulation may be performed on the pulse signal data transmitted on the channel of V polarization, such as by setting a product of $\pi$ and a sequence number of the pulse signal data being transmitted on the channel of V polarization as a modulation phase for performing linear phase modulation on the pulse signal data being transmitted on the channel of V polarization, as shown by the formula (1).

The $\varphi_{\mathrm{mod\_}H}$ may be a modulation phase of the pulse signal transmitted on the channel of H polarization. The $\varphi_{\mathrm{mod\_}V}$ may be the modulation phase of the pulse signal transmitted on the channel of V polarization. The n may be the sequence number of the pulse signal data that specifies an nth pulse transmitted.

The modulated pulse signal data may then be transmitted. A polarized signal $H$+V·exp($j\varphi$) and a polarized signal $H$-V·exp($j\varphi$) may be transmitted, alternatively.

In step 102, full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation.

In full polarimetric SAR, a pulse may be transmitted respectively on the channel of H polarization and the channel of V polarization. The full polarimetric echo data may then be formed by polarimetric echo data of four channels HH, HV, VH, and VV received respectively on the channel of H polarization and the channel of V polarization.

Phase demodulation may be performed, using the preset rule for phase demodulation, on the overall full polarimetric echo signal of the four-channel polarimetric echo data received on the channel of H polarization and the channel of V polarization of full polarimetric SAR. According to the preset rule for phase demodulation, phase demodulation may be performed on the overall full polarimetric echo signal using a transmission phase consistent with a main signal, as shown by the formula (2). The main signal may refer to a payload (i.e., useful) signal of full polarimetric SAR.

The $\phi_{demo}(n)$ may be a demodulation phase. The n may specify an nth pulse received. The m may be a number of inter-pulse intervals between a pulse transmitted and a pulse received.

The modulation and demodulation may have no impact on the main signal. The demodulation phase used is the transmission phase used for the main signal. Therefore, a residual phase of the main signal after the demodulation is 0. Accordingly, there will be no shift in an azimuth spectrum of the main signal.

A residual phase of a kth-order range ambiguous signal in the four-channel polarimetric echo data of full polarimetric SAR having gone through the modulation and the demodulation may be expressed by the formula (3).

The p may be one of the four channels of polarization HH, HV, VH, and VV. An even k may indicate an even ambiguous region. An odd k may indicate an odd ambiguous region.

According to the formula (3), after the modulation and the demodulation of full polarimetric SAR, there is no residual phase for the channels HH and VH in an even ambiguous region, and a residual phase of $\dfrac{k}{2}\pi$ for the channels HV and VV in an even ambiguous region. Therefore, a fixed residual phase due to the modulation and the demodulation may have no impact on a spectrum of a signal in an even ambiguous region. On the other hand, an azimuth linear residual phase $n\pi + \dfrac{k-1}{2}\pi$ may be produced by odd-order signals of all components of the H channel and the V channel. The formula (4) may be acquired according to an azimuth time $t_m = n/PRF$ .

According to the formula (4), a frequency shift of PRF/2 in a Doppler frequency domain may be produced for a signal in an odd ambiguous region. FIG.3 is a diagram of an azimuth spectrum of the phase demodulated echo data.

In step 103, echo data are acquired by filtering out, using a preset azimuth filter, range-ambiguity energy from the phase demodulated full polarimetric echo data.

An azimuth filter may be preset according to the rule for phase modulation and the rule for phase demodulation. The phase demodulated full polarimetric echo data may then be filtered using the preset azimuth filter. The preset azimuth filter may be an azimuth frequency-domain Wiener filter. The azimuth frequency-domain Wiener filter may be constructed based on a Minimum-Mean-Square-Error (MMSE) theory, i.e., by minimizing a mean square error of an unambiguous signal and a filtered signal. The phase demodulated full polarimetric echo data may be converted into phase demodulated full polarimetric echo data in the Doppler frequency domain. The phase demodulated full polarimetric echo data in the Doppler frequency domain may then be filtered using the azimuth frequency-domain Wiener filter. Out-of-band ambiguity energy may thus be removed. Part of in-band ambiguity energy may be removed as well.

A key reason the azimuth frequency-domain Wiener filter may be used is that the spectrum of an ambiguous signal is inconsistent with that of the main signal. The modulation and the demodulation may convert the range-ambiguity energy into azimuth-ambiguity energy. A range ambiguous spectrum in the Doppler frequency domain may be shifted with respect to the spectrum of the main signal. A Wiener filter may show high performance in solving an MMSE-related problem. The Wiener filter may be expressed by the formula (5).

The $S_0(f)$ may be the azimuth spectrum of the main signal, namely, the payload signal. The $S_{-1}(f)$ may be an azimuth spectrum of an ambiguous signal of an order -1. The $S_{+1}(f)$ may be an azimuth spectrum of an ambiguous signal of an order 1. The $\sigma_t$ may be a noise power spectrum. Each of the $S_0(f)$, the $S_{-1}(f)$, the $S_{+1}(f)$, and the $\sigma_t$ may be acquired using an existing computational model according to a parameter of full polarimetric SAR.

With the step, the range ambiguity in full polarimetric SAR may be suppressed, and the echo data with the range-ambiguity energy removed may be acquired.

According to an embodiment herein, a device for suppressing range ambiguity in SAR includes a processor and memory storing instructions executable by the processor. When executed by the processor, the instructions cause the processor to perform a method for suppressing range ambiguity in SAR. As shown in FIG.1, the method includes step(s) as follows.

In step 101, azimuth transmission-phase modulation is performed respectively, using a preset rule for phase modulation, on pulse signal data transmitted on a channel of H polarization and pulse signal data transmitted on a channel of V polarization.

In full polarimetric SAR, a pulse may be transmitted alternatively on a channel of H polarization (H channel) and a channel of V polarization (V channel). Azimuth transmission-phase modulation may be performed on the pulse signal data corresponding to the pulse transmitted alternatively on the channel of H polarization and the channel of V polarization. The full polarimetric SAR may be spaceborne.

As shown in FIG.2, the preset rule for phase modulation may be as follows. No phase modulation may be performed on the pulse signal data transmitted on the channel of H polarization. Linear phase modulation may be performed on the pulse signal data transmitted on the channel of V polarization, such as by setting a product of $\pi$ and a sequence number of the pulse signal data being transmitted on the channel of V polarization as a modulation phase for performing linear phase modulation on the pulse signal data being transmitted on the channel of V polarization, as shown by the formula (1).

The $\varphi_{mod\_H}$ may be a modulation phase of the pulse signal transmitted on the channel of H polarization. The $\varphi_{mod\_V}$ may be the modulation phase of the pulse signal transmitted on the channel of V polarization. The n may be the sequence number of the pulse signal data that specifies an nth pulse transmitted.

The modulated pulse signal data may then be transmitted. A polarized signal $H+V \cdot \exp(j\varphi)$ and a polarized signal $H-V \cdot \exp(j\varphi)$ may be transmitted, alternatively.

In step 102, full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation.

In full polarimetric SAR, a pulse may be transmitted respectively on the channel of H polarization and the channel of V polarization. The full polarimetric echo data may then be formed by polarimetric echo data of four channels HH, HV, VH, and VV received respectively on the channel of H polarization and the channel of V polarization.

Phase demodulation may be performed, using the preset rule for phase demodulation, on the overall full polarimetric echo signal of the four-channel polarimetric echo data received on the channel of H polarization and the channel of V polarization of full polarimetric SAR. According to the preset rule for phase demodulation, phase demodulation may be performed on the overall full polarimetric echo signal using a transmission phase consistent with a main signal, as shown by the formula (2). The main signal may refer to a payload (i.e., useful) signal of full polarimetric SAR.

The $\phi_{demo}(n)$ may be a demodulation phase. The n may specify an nth pulse received. The m may be a number of inter-pulse intervals between a pulse transmitted and a pulse received.

The modulation and demodulation may have no impact on the main signal. The demodulation phase used is the transmission phase used for the main signal. Therefore, a residual phase of the main signal after the demodulation is 0. Accordingly, there will be no shift in an azimuth spectrum of the main signal.

A residual phase of a kth-order range ambiguous signal in the four-channel polarimetric echo data of full polarimetric SAR having gone through the modulation and the demodulation may be expressed by the formula (3).

The p may be one of the four channels of polarization HH, HV, VH, and VV. An even k may indicate an even ambiguous region. An odd k may indicate an odd ambiguous region.

According to the formula (3), after the modulation and the demodulation of full polarimetric SAR, there is no residual phase for the channels HH and VH in an even ambiguous region, and a residual phase of $\dfrac{k}{2}\pi$ for the channels HV and VV in an even ambiguous region. Therefore, a fixed residual phase due to the modulation and the demodulation may have no impact on a spectrum of a signal in an even ambiguous region. On the other hand, an azimuth linear residual phase $n\pi + \dfrac{k-1}{2}\pi$ may be produced by odd-order signals of all components of the H channel and the V channel. The formula (4) may be acquired according to an azimuth time $t_m = n/PRF$.

According to the formula (4), a frequency shift of PRF/2 in a Doppler frequency domain may be produced for a signal in an odd ambiguous region. FIG.3 is a diagram of an azimuth spectrum of the phase demodulated echo data.

In step 103, echo data are acquired by filtering out, using a preset azimuth filter, range-ambiguity energy from the phase demodulated full polarimetric echo data.

An azimuth filter may be preset according to the rule for phase modulation and the rule for phase demodulation. The phase demodulated full polarimetric echo data may then be filtered using the preset azimuth filter. The preset azimuth filter may be an azimuth frequency-domain Wiener filter. The azimuth frequency-domain Wiener filter may be constructed based on a Minimum-Mean-Square-Error (MMSE) theory, i.e., by minimizing a mean square error of an unambiguous signal and a filtered signal. The phase demodulated full polarimetric echo data may be converted into phase demodulated full polarimetric echo data in the Doppler frequency domain. The phase demodulated full polarimetric echo data in the Doppler frequency domain may then be filtered using the azimuth frequency-domain Wiener filter. Out-of-band ambiguity energy may thus be removed. Part of in-band ambiguity energy may be removed as well.

A key reason the azimuth frequency-domain Wiener filter may be used is that the spectrum of an ambiguous signal is inconsistent with that of the main signal. The modulation and the demodulation may convert the range-ambiguity energy into azimuth-ambiguity energy. A range ambiguous spectrum in the Doppler frequency domain may be shifted with respect to the spectrum of the main signal. A Wiener filter may show high performance in solving an MMSE-related problem. The Wiener filter may be expressed by the formula (5).

The $S_0(f)$ may be the azimuth spectrum of the main signal, namely, the payload signal. The $S_{-1}(f)$ may be an azimuth spectrum of an ambiguous signal of an order -1. The $S_{+1}(f)$ may be an azimuth spectrum of an ambiguous signal of an order 1. The $\sigma_t$ may be a noise power spectrum. Each of the $S_0(f)$, the $S_{-1}(f)$, the $S_{+1}(f)$, and the $\sigma_t$ may be acquired using an existing computational model according to a parameter of full polarimetric SAR.

With the step, the range ambiguity in full polarimetric SAR may be suppressed, and the echo data with the range-ambiguity energy removed may be acquired.

What described are merely embodiments of the present disclosure, and are not intended to limit the scope of the present disclosure. Any modification, equivalent replacement, improvement, and/or the like made within the spirit and principle of the present disclosure should be included in the scope of the present disclosure.

**Claims**

1. A method for suppressing range ambiguity in Synthetic Aperture Radar (SAR), comprising:

   performing, using a preset rule for phase modulation, azimuth transmission-phase modulation respectively on pulse signal data transmitted on a channel of Horizontal (H) polarization and pulse signal data transmitted on a channel of Vertical (V) polarization;
   acquiring full polarimetric echo data corresponding to the transmission-phase modulated pulse signal data transmitted on the channel of H polarization and the transmission-phase modulated pulse signal data transmitted on the channel of V polarization, and performing azimuth phase demodulation on the full polarimetric echo data using a preset rule for phase demodulation; and
   acquiring echo data by filtering out, using a preset azimuth filter, range-ambiguity energy from the phase demodulated full polarimetric echo data.

2. The method according to claim 1, wherein the performing, using a preset rule for phase modulation, azimuth transmission-phase modulation respectively on pulse signal data transmitted on a channel of Horizontal (H) polarization and pulse signal data transmitted on a channel of Vertical (V) polarization comprises:

   performing no phase modulation on the pulse signal data transmitted on the channel of H polarization; and
   performing linear phase modulation on the pulse signal data transmitted on the channel of V polarization by setting a product of $\pi$ and a sequence number of the pulse signal data being transmitted on the channel of V polarization as a modulation phase for performing linear phase modulation on the pulse signal data being transmitted on the channel of V polarization.

3. The method according to claim 1, wherein the performing azimuth phase demodulation on the full polarimetric echo data using a preset rule for phase demodulation comprises: performing phase demodulation on the full polarimetric echo data using a transmission phase consistent with a main signal.

4. The method according to any one of claims 1 to 3, wherein the filtering out, using a preset azimuth filter, range-ambiguity energy from the phase demodulated full polarimetric echo data comprises:

   converting the phase demodulated full polarimetric echo data into phase demodulated full polarimetric echo data in a Doppler frequency domain; and
   filtering the phase demodulated full polarimetric echo data in the Doppler frequency domain using an azimuth frequency-domain Wiener filter.

5. The method according to claim 4, wherein the azimuth frequency-domain Wiener filter is associated with a formula of:

$$H(f) = \frac{S_0(f)}{S_0(f) + S_{-1}(f) + S_{+1}(f) + \sigma_t},$$

   wherein the $S_0(f)$ is an azimuth spectrum of a payload signal, each of the $S_{-1}(f)$ and the $S_{+1}(f)$ is an azimuth spectrum of a first-order ambiguous signal, and the $\sigma_t$ is a noise power spectrum.

6. A device for suppressing range ambiguity in Synthetic Aperture Radar (SAR), comprising a modulating module, a demodulating module, and a filtering module,

   wherein the modulating module is arranged for: performing, using a preset rule for phase modulation, azimuth transmission-phase modulation respectively on pulse signal data transmitted on a channel of Horizontal (H) polarization and pulse signal data transmitted on a channel of Vertical (V) polarization,
   wherein the demodulating module is arranged for: acquiring full polarimetric echo data corresponding to the transmission-phase modulated pulse signal data transmitted on the channel of H polarization and the transmission-phase modulated pulse signal data transmitted on the channel of V polarization, and performing azimuth phase demodulation on the full polarimetric echo data using a preset rule for phase demodulation,
   wherein the filtering module is arranged for: acquiring echo data by filtering out, using a preset azimuth filter, range-ambiguity energy from the phase demodulated full polarimetric echo data.

**7.** The device according to claim 6, wherein the modulating module is arranged for:

performing no phase modulation on the pulse signal data transmitted on the channel of H polarization; and performing linear phase modulation on the pulse signal data transmitted on the channel of V polarization by setting a product of $\pi$ and a sequence number of the pulse signal data being transmitted on the channel of V polarization as a modulation phase for performing linear phase modulation on the pulse signal data being transmitted on the channel of V polarization.

**8.** The device according to claim 6, wherein the demodulating module is arranged for:

performing phase demodulation on the full polarimetric echo data using a transmission phase consistent with a main signal.

**9.** The device according to any one of claims 6 to 8, wherein the filtering module is arranged for:

converting the phase demodulated full polarimetric echo data into phase demodulated full polarimetric echo data in a Doppler frequency domain; and filtering the phase demodulated full polarimetric echo data in the Doppler frequency domain using an azimuth frequency-domain Wiener filter.

**10.** The device according to claim 9, wherein the azimuth frequency-domain Wiener filter is associated with a formula of:

$$H(f) = \frac{S_0(f)}{S_0(f) + S_{-1}(f) + S_{+1}(f) + \sigma_t},$$

wherein the $S_0(f)$ is an azimuth spectrum of a payload signal, each of the $S_{-1}(f)$ and the $S_{+1}(f)$ is an azimuth spectrum of a first-order ambiguous signal, and the $\sigma_t$ is a noise power spectrum.

**11.** A computer-readable storage medium having stored therein instructions that, when executed by a processor, cause the processor to perform the method according to any one of claims 1 to 5.

**12.** A device for suppressing range ambiguity in Synthetic Aperture Radar (SAR), comprising:

a processor; and memory storing instructions executable by the processor,

wherein when executed by the processor, the instructions cause the processor to perform the method according to any one of claims 1 to 5.

azimuth transmission-phase modulation is performed respectively, using a preset rule for phase modulation, on pulse signal data transmitted on a channel of H polarization and pulse signal data transmitted on a channel of V polarization

101

full polarimetric echo data corresponding to the transmission-phase modulated pulse signal data transmitted on the channel of H polarization and the transmission-phase modulated pulse signal data transmitted on the channel of V polarization are acquired. Azimuth phase demodulation is performed on the full polarimetric echo data using a preset rule for phase demodulation

102

echo data are acquired by filtering out, using a preset azimuth filter, range-ambiguity energy from the phase demodulated full polarimetric echo data

103

FIG.1

FIG.2

FIG.3

VV polarization

without a method herein

with a method herein

angle of view    (deg)

（a）

HV polarization

without a method herein

with a method herein

angle of view    (deg)

（b）

FIG.4

conventional VH

(a)

conventional HH

(b)

VH

(c)

HH

(d)

FIG.5

modulating module | demodulating module | filtering module

61

62

63

FIG.6

Europäisches
Patentamt

European
Patent Office

Office européen
des brevets

# EUROPEAN SEARCH REPORT

Application Number

EP 18 19 3062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xiaojing Zhu ET AL: "Range Ambiguity Suppression Approach for Quad-pol SAR Systems Based on Modified Azimuth Phase Coding", Journal of Radars, 1 August 2017 (2017-08-01), pages 420-431, XP055540595, DOI: 10.12000/JR17015 Retrieved from the Internet: URL:https://epo.summon.serialssolutions.com/2.0.0/link/0/eLvHCXMwtV1Nb9QwELWAXrggEEiUL_nALYrIOnacHLerdrkgYFlE6WX1xE43qN2tqs2FX8-bxN6klAMguESRk1iJ52XmjT2eYey1U3VSCVpkhX2NpcFZXgsbl5SHNrdamS5vwdeZXM71Yk7VGkJJw6Htv0oabZA17Zz9A2nvO0UDziFzHCF1HH9L7gvaLRBNL8vmvCWGTWU7-1jXDVHOfgMVxRZ-bI2Nr7YX0afpIiQuj45g1CwtILz [retrieved on 2019-01-10] * the whole document * | 1-12 | INV. G01S13/90 G01S7/02 G01S13/32 |
| A | EP 2 416 174 A1 (NEC CORP [JP]) 8 February 2012 (2012-02-08) * the whole document * | 1-12 | TECHNICAL FIELDS SEARCHED (IPC) G01S |
| A | GERHARD KRIEGER ET AL: "Multidimensional Waveform Encoding: A New Digital Beamforming Technique for Synthetic Aperture Radar Remote Sensing", IEEE TRANSACTIONS ON GEOSCIENCE AND REMOTE SENSING, IEEE SERVICE CENTER, PISCATAWAY, NJ, US, vol. 46, no. 1, 1 January 2008 (2008-01-01), pages 31-46, XP011198512, ISSN: 0196-2892, DOI: 10.1109/TGRS.2007.905974 * the whole document * | 1-12 | |

-/--

The present search report has been drawn up for all claims

| Place of search | Date of completion of the search | Examiner |
|---|---|---|
| Munich | 11 January 2019 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 19 3062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VILLANO MICHELANGELO ET AL: "New Insights Into Ambiguities in Quad-Pol SAR", IEEE TRANSACTIONS ON GEOSCIENCE AND REMOTE SENSING, IEEE SERVICE CENTER, PISCATAWAY, NJ, US, vol. 55, no. 6, 1 June 2017 (2017-06-01), pages 3287-3308, XP011650409, ISSN: 0196-2892, DOI: 10.1109/TGRS.2017.2667886 [retrieved on 2017-05-19] * the whole document * ----- | 1-12 | |
| | | | TECHNICAL FIELDS SEARCHED (IPC) |

The present search report has been drawn up for all claims

| Place of search | Date of completion of the search | Examiner |
|---|---|---|
| Munich | 11 January 2019 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 19 3062

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2019

| Patent document cited in search report | | Publication date | Patent family member(s) | | Publication date |
|---|---|---|---|---|---|
| EP 2416174 | A1 | 08-02-2012 | CA | 2747489 A1 | 03-02-2012 |
| | | | EP | 2416174 A1 | 08-02-2012 |
| | | | JP | 5652040 B2 | 14-01-2015 |
| | | | JP | 2012032348 A | 16-02-2012 |

EPO FORM P0459

For more details about this annex : see Official Journal of the European Patent Office, No. 12/82